# EUROPÄISCHE PATENTSCHRIFT

(11) **EP 1 308 468 B1**
(45) Veröffentlichungstag und Bekanntmachung des Hinweises auf die Patenterteilung: **17.09.2003**
(21) Anmeldenummer: 02023067.8
(22) Anmeldetag: 17.10.2002
(51) Int. Cl.: C08F 220/12, C08F 246/00, C08F 230/08, C09D 143/04

(54) **Hydrophob modifizierte Copolymerisate**
Hydrophobically modified copolymers
Copolymères modifiés de manière hydrophobe

(30) Priorität: 31.10.2001 DE 10153734
(43) Veröffentlichungstag der Anmeldung: 07.05.2003
(73) Patentinhaber: Wacker Polymer Systems GmbH & Co. KG, 84489 Burghausen (DE)
(72) Erfinder: Stark, Kurt, Dr., 84508 Burgkirchen (DE); Zeh, Harald, Dr., 84489 Burghausen (DE); Büppelmann, Klaus, Dr., 84547 Emmerting (DE)
(74) Vertreter: Schuderer, Michael, Dr.

(56) Entgegenhaltungen:
- EP-A- 0 122 457
- EP-A- 0 159 894

## Beschreibung

Die Erfindung betrifft hydrophob modifizierte Copolymerisate in Form deren wässrigen Dispersionen oder in Wasser redispergierbaren Pulver, Verfahren zu deren Herstellung sowie deren Verwendung.

Aus dem Stand der Technik ist bekannt, dass durch den Einsatz von hydrolysierbaren Vinylsilanen bei der Herstellung von Polymerdispersionen Verbesserungen der Eigenschaften als Bindemittel für Farben erzielt werden können. So wird in der DE-C 2148457 (GB-A 1407827) beschrieben, wie durch den Einsatz von wässrigen Dispersionen, welche Polymerisate mit einpolymerisierten Silanolgruppen enthalten, die Nasshaftung von Bautenbeschichtungsmitteln auf verschiedensten Untergründen verbessert werden kann. Die EP-A 327376 beschreibt Polymerdispersionen auf Vinylesterbasis, welche einen niederen Anteil an ethylenisch ungesättigten Alkoxysilanmonomere enthalten. Die Polymerdispersionen werden zur Herstellung von Farben mit guten Nassabriebswerten empfohlen. Aus der EP-A 327006 (US-A 5576384) sind VOC-arme (VOC = volatile organic compounds) Dispersionsfarben und Putze bekannt, welche als Bindemittel Copolymerisate mit hydrolysierbaren Silaneinheiten enthalten.

Aus der WO-A 95/20626 ist bekannt, in Wasser redispergierbare Polymerpulver durch Zugabe von nicht copolymerisierbaren Organosiliciumverbindungen zu modifizieren.

Nachteilig bei diesen silanmodifizierten Polymerdispersionen ist, dass diese bei einem Einsatz als Anstrichmittel bzw. Farbe keine generelle Verbesserung der Nasshaftung bewirken, sondern sehr unterschiedlich in den verschiedenen Farbformulierungen wirken. In der EP-A 1153979 wird dieses Verhalten dadurch verbessert, indem man die Polymerisate mit einer Kombination aus copolymerisierbaren Silanen und ethylenisch ungesättigten Epoxiden modifiziert.

Die EP-A 0352339 beschreibt Schutzanstriche für Betonkonstruktionen, welche Copolymerisate von Divinyl-Polydimethylsiloxan mit Acrylat- bzw. Methacrylatestern und mit Vinyl- bzw. Acrylfunktionellen Alkoxysilanen als Lösung in organischen Lösungsmitteln enthalten. Wärmehärtbare Acrylharzlösungen in organischen Lösungsmitteln, welche zur Beschichtungen von Metallen, insbesondere Edelstahl eingesetzt werden, sind Gegenstand der EP-A 159894. Zur Verbesserung der Metallhaftung, insbesondere zur Verhinderung des Abblätterns der Beschichtung bei Verformung der beschichteten Metallteile, werden Acrylharzlösungen eingesetzt, von Copolymerisaten aus (Meth)acrylat, hydroxy- oder epoxyfunktionellem (Meth)acrylat, vinylfunktionellem Polysiloxan und vinylfunktionellem Silan. Zur Haftungsverbesserung werden die Polymerisate mittels organischen Zinnverbindungen als Vernetzungskatalysatoren nachvernetzt und thermisch ausgehärtet. Nachteilig ist bei den lösemittelhaltigen und wärmehärtbaren Beschichtungsmitteln, dass diese aufgrund des Lösemittelanteils und der thermischen Vernetzung als Bindemittel für Kunststoffputze oder in Innenfarben und Aussenfarben für "" Gebäudeanstriche nicht verwendet werden können.

In der EP-B 771826 werden wässrige Bindemittel für Coatings und Klebemittel auf der Basis von Emulsionspolymerisaten von Vinylestern, Acryl- oder Methacrylsäureestern oder Vinylaromaten beschrieben, welche als Vernetzer Polysiloxane mit ungesättigten Resten, beispielsweise Vinyl-, Acryloxy- bzw. Methacryloxy-Gruppen, enthalten, beschrieben. Dabei wird das organische Monomer emulgierte und polymerisiert und nach einem bestimmten Zeitpunkt wird während der Reaktion das Silikon zugesetzt. Als Additive können niedermolekulare, polymerisierbare oder nicht polymerisierbare Silane nachträglich zugesetzt werden, die eine weitere, nachträgliche Vernetzung des Polymerisats mit Organozinnverbindungen ermöglichen. In der EP-A 943634 werden wässrige Latices zur Verwendung als Beschichtungsmittel beschrieben, welche durch Copolymerisation von ethylenisch ungesättigten Monomeren in Gegenwart eines Silanoigruppen enthaltenden Siliconharzes hergestellt werden. Es bilden sich dabei interpenetrating networks (IPN) zwischen den Polymerketten und Polysiloxanketten. Die EP-A 1095953 beschreibt mit Silikon gepfropfte Vinylcopolymere, wobei ein Carbosiloxan-Dendrimer auf dem Vinylpolymerisat aufgepfropft ist.

Die zuletztgenannten Emulsionspolymerisate eignen sich zwar für Aussenanwendungen, jedoch läßt deren Nassabriebsbeständigkeit stets zu wünschen übrig. Ein weiterer.Nachteil der im Stand der Technik beschriebenen Silikon-modifizierten Emulsionspolymerisate ist eine starke Neigung zur Hydrolyse und zum unkontrollierten Vernetzen, die bei manchen Anwendungen zwar gewünscht und nachträglich, durch Silan- und Katalysatorzugabe, noch verstärkt wird, aber bei Anstrichdispersionen bzw. beim Einsatz als Beschichtungsmittel zu unerwünschten Gelkörpern. "Stippen" und unlöslichen Bestandteilen führt. Des weiteren sind die bisher bekannten Silikon-haltigen Emulsionspolymerisate oftmals nicht alkalibeständig, da Silikone bekanntlich im Alkalischen nicht stabil sind. Aus diesem Grund nehmen in den bisher beschriebenen Systemen die Hydrophobie und die damit verbundenen positiven Eigenschaften nach einem längerem Zeitraum sehr stark ab. Schließlich stellt sich bei den Emulsionspolymerisaten durch das Einbringen einer großen Menge an Silanen oder Silikonen eine ungenügende Teilchengrößenverteilung ein, das heißt die Teilchen werden zu groß und das Polymerisat wird inhomogen, was sich in einer Serumbildung oder Phasenseparation äußern kann.

Aufgabe der Erfindung war es daher, Polymerisate zu entwickeln, die zum einen zu Beschichtungsmitteln, beispielsweise Farben, mit sehr guter Nassabriebsbeständigkeit führen und zum anderen hydrolysebeständig und hydrophob, dadurch witterungsstabil, wasserabweisend und nicht verschmutzend sind und darüber hinaus eine gute Wasserdampfdurchlässigkeit aufweisen, so dass diese auch für den Ausseneinsatz,beispielsweise im Baubereich erfolgreich verwendet werden können.

Gegenstand der Erfindung sind funktionalisierte, mit Silikonen hydrophob modifizierte Copolymerisate in Form deren wässrigen Dispersionen oder in Wasser redispergierbaren Pulver, auf Basis von
a) 60 bis 98.89 Gew.-% von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide,
b) 0.01 bis 30 Gew.-% von einem oder mehreren Silikonen mit einer Zahl von SiO(CₙH₂ₙ₊₁)₂-Wiederholungseinheiten von 10 bis 1000 und n = 1 bis 6, wobei 90 bis 100 Gew.-% der Silikone b) mindestens eine, aber höchstens zwei polymerisierbare Gruppen enthalten,
c) 0.05 bis 5.0 Gew.-% von einem oder mehreren hydrolysierbaren Silan-Monomeren aus der Gruppe umfassend ethylenisch ungesättigte, hydrolysierbare Siliciumverbindungen und hydrolysierbare Siliciumverbindungen aus der Gruppe umfassend Epoxysilane, Aminosilane und Mercaptosilane,
d) 0.05 bis 5.0 Gew.-% von einem oder mehreren Monomeren aus der Gruppe umfassend ethylenisch ungesättigte Epoxidverbindungen,
wobei die Angaben in Gew.-% für die Komponenten a) bis d) jeweils auf das Gesamtgewicht der eingesetzten Monomere bezogen sind und sich auf 100 Gew.-% aufaddieren.

Geeignete Vinylester sind Vinylester von unverzweigten oder verzweigten Carbonsäuren mit 1 bis 15 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 5 bis 11 C-Atomen, beispielsweise VeoVa9^{R} oder VeoVa10^{R} (Handelsnamen der Firma Shell). Besonders bevorzugt ist Vinylacetat, am meisten bevorzugt ist eine Kombination von Vinylacetat mit α-verzweigten Monocarbonsäuren mit 5 bis 11 C-Atomen, wie VeoVa10.

Geeignete Monomere aus der Gruppe der Ester der Acrylsäure oder Methacrylsäure sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-, iso- und t-Butylacrylat, n-, iso- und t-Butylmethacrylat, 2-Ethylhexylacrylat, Norbornylacrylat. Besonders bevorzugt sind Methylacrylat, Methylmethacrylat, n-, iso- und t-Butylacrylat, 2-Ethylhexylacrylat und Norbornylacrylat.

Geeignete Diene sind 1,3-Butadien und Isopren. Beispiele für copolymerisierbare Olefine sind Ethen und Propen. Als Vinylaromaten können Styrol und Vinyltoluol copolymerisiert werden. Aus der Gruppe der Vinylhalogenide werden üblicherweise Vinylchlorid, Vinylidenchlorid oder Vinylfluorid, vorzugsweise Vinylchlorid, eingesetzt.

Gegebenenfalls können noch 0.05 bis 10 Gew.-%, bezogen auf das Gesamtgewicht des Copolymerisats, Hilfsmonomere copolymerisiert werden. Beispiele für Hilfsmonomere sind ethylenisch ungesättigte Mono- und Dicarbonsäuren, vorzugsweise Ac-rylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl-, und Diisopropylester sowie Maleinsäureanhydrid, ethylenisch ungesättigte Sulfonsäuren bzw. deren Salze, vorzugsweise Vinylsulfonsäure, 2-Acrylamido-2-methylpropansulfonsäure. Weitere Beispiele sind vorvernetzende Comonomere wie mehrfach ethylenisch ungesättigte Comonomere, beispielsweise Divinyladipat, Diallylmaleat, Allylmethacrylat, Butandioldiacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, NN-Methylolallylcarbamat, Alkylether wie der Isobutoxyether oder Ester des N-Methylolacrylamids, des N-Methylolmethacrylamids und des N-Methylolallylcarbamats.

Bevorzugt sind die nachfolgend genannten Copolymerzusammensetzungen, welche noch die Comonomeranteile b), c), und d) enthalten, sowie Hilfsmonomeranteile in den angegebenen Mengen enthalten können:
Vinylester-Copolymerisate von Vinylacetat mit weiteren Vinylestern wie Vinyllaurat, Vinylpivalat, Vinyl-2-ethylhexansäureester, Vinylester einer alpha-verzweigten Carbonsäure, insbesondere Versaticsäurevinylester (VeoVa9^{R}, VeoVa10^{R}) Vinylester-Ethylen-Copolymerisate, wie Vinylacetat-Ethylen-Copolymerisate, welche gegebenenfalls noch weitere Vinylester wie Vinyllaurat, Vinylpivalat, Vinyl-2-ethylhexansäureester, Vinylester einer alpha-verzweigten Carbonsäure, insbesondere Versaticsäurevinylester (VeoVa9^{R}, VeoVa10^{R}), oder Fumarsäureoder Maleinsäurediester enthalten;
Vinylester-Ethylen-Vinylchlorid-Copolymerisate, wobei als Vinylester bevorzugt Vinylacetat und/oder Vinylpropionat und/oder ein oder mehrere copolymerisierbare Vinylester wie Vinyllaurat, Vinylpivalat, Vinyl-2Vinyl-2-ethylhexansäureester, Vinylester einer alpha-verzweigten Carbonsäure, insbesondere Versaticsäurevinylester (VeoVa9^{R}, VeoVa10^{R}), enthalten sind;
Vinylester-Acrylsäureester-Copolymerisate mit Vinylacetat und/oder Vinyllaurat und/oder Versaticsäure-Vinylester und Acrylsäureester, insbesondere Butylacrylat oder 2-Ethylhexylacrylat, welche gegebenenfalls noch Ethylen enthalten; Acrylsäureester-Copolymerisate mit n-Butylacrylat und/oder 2-Ethylhexylacrylat;
Methylmethacrylat-Copolymerisate mit Butylacrylat und/oder 2-Ethylhexylacrylat, und/oder 1,3-Butadien;
Styrol-1,3-Butadien-Copolymerisate und Styrol-(Meth)Acrylsäureester-Copolymerisate wie Styrol-Butylacrylat, Styrol-Methylmethacrylat-Butylacrylat oder Styrol-2-Ethylhexylacrylat, wobei als Butylacrylat n-, iso-, tert-Butylacrylat eingesetzt werden kann.

Am meisten bevorzugt werden Vinylester-Ethylen-Copolymerisate wie Vinylacetat-Ethylen-Copolymerisate, sowie insbesondere Copolymerisate von Vinylacetat und Ethylen und Vinylester einer α-verzweigten Carbonsäure mit 9 oder 10 C-Atomen (VeoVa9^{R}, Ve-OVa10^{R}), mit einem Ethylenanteil von vorzugsweise 2 bis 30 Gew.-%, welche gegebenenfalls noch Hilfsmonomeranteile in den angegebenen Mengen enthalten können.

Geeignete Silikone b) sind lineare oder verzweigte Polydialkylsiloxane mit C₁- bis C₆-Alkylrest, und mit einer Kettenlänge von 10 bis 1000, bevorzugt 50 bis 500 SiO(CₙH₂ₙ₊₁)₂-Einheiten. Vorzugsweise 90 bis 99.5 Gew.-%, besonders bevorzugt 95 bis 99.5 Gew.-% der Polydialkylsiloxane des Silikonanteils b) enthalten eine oder zwei,terminale, polymerisierbare Gruppen (funktionelle Gruppen). Beispiele hierfür sind Polydialkylsiloxane mit einer oder zwei Vinyl-, Acryloxyalkyl-, Methacryloxyalkyl-oder Mercaptoalkyl-Gruppen, wobei die Alkylgruppen gleich oder verschieden sein können und 1 bis 6 C-Atome enthalten. Bevorzugt werden α,ω-Divinyl-Polydimethylsiloxane, α,ω-Di-(3-acryloxypropyl)-Polydimethylsiloxane, α,ω-Di-(3-methacryloxypropyl)-Polydimethylsiloxane, α-Monovinyl-Polydimethylsiloxane, α-Mono-(3-acryloxypropyl)-Polydimethylsiloxane, α-Mono-(3-methacryloxypropyl)-Polydimethylsiloxane, sowie Silikone mit kettenübertragenden Gruppen wie α-Mono- (3-mercaptopropyl) -Polydimethylsiloxane oder α,ω-Di- (3-mercaptopropyl)-Polydimethylsiloxane.
Besonders bevorzugt sind Gemische von unfunktionalisierten, linearen oder verzweigten Polydialkylsiloxanen, insbesondere Polydimethylsiloxanen, mit linearen oder verzweigten Polydialkylsiloxanen, insbesondere Polydimethylsiloxanen, welche eine und/oder zwei der obengenannten Gruppen, insbesondere Vinylgruppen am Kettenende enthalten. Beispiele für solche Gemische sind binäre Gemische aus monofunktionellen und unfunktionellen Polydialkylsiloxanen, sowie difunktionellen und unfunktionellen Polydialkylsiloxanen, wobei der Anteil an unfunktionellen Polydialkylsiloxanen jeweils 1 bis 50 Gew.-%, bezogen auf das Gesamtgewicht der Silikonkomponte b) beträgt, sowie binäre Gemische aus monofunktionellen und difunktionellen Polydialkylsiloxanen. Bevorzugt werden ternäre Gemische aus unfunktionellen Polydialkylsiloxanen b1), monofunktionellen Polydialkylsiloxanen b2) und difunktionellen Polydialkylsiloxanen b3), wobei besonders bevorzugt die Gewichtsanteile 1 bis 10 Gew.-% b1), 5 bis 50 Gew.-% b2) und 40 bis 90 Gew.-% b3) betragen, jeweils bezogen auf das Gesamtgewicht der Silikonkomponte b). Die genannten Polydialkylsiloxane sowie deren Gemische sind im Handel erhältlich, beispielsweise Dehesive®-Silikone der Wacker-Chemie GmbH.

Die Komponenten a) und b) werden dabei vorzugsweise so ausgewählt, dass wässrige Copolymerdispersionen und wässrige Redispersionen der Copolymerpulver resultieren, die ohne Zusatz von Filmbildehilfsmittel eine Mindestfilmbildetemperatur MFT von < 10°C, bevorzugt < 5°C, insbesondere von 0°C bis 2°C aufweisen. Dem Fachmann ist aufgrund der Glasübergangstemperatur Tg bekannt, welche Monomere bzw. Monomermischungen dafür eingesetzt werden können. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Geeignete hydrolysierbare Siliciumverbindungen c) sind ethylenisch ungesättigte und damit copolymerisierbare Siliciumverbindungen der allgemeinen Formel R¹SiR₀₋₂(OR²)₁₋₃, wobei R die Bedeutung C₁- bis C₃-Alkylrest, C₁- bis C₃-Alkoxyrest oder Halogen (z.B. Cl oder Br) hat, R₁ die Bedeutung CH₂=CR³-(CH₂) ₀₋₁ oder CH₂=CR³CO₂(CH₂)₁₋₃ hat, R² ein unverzweigter oder verzweigter, gegebenenfalls substituierter Alkylrest mit 1 bis 12 C-Atomen, vorzugsweise 1 bis 3 C-Atomen, ist oder ein Acylrest mit 2 bis 12 C-Atomen ist, wobei R² gegebenenfalls durch eine Ethergruppe unterbrochen sein kann, und R³ für H oder CH₃ steht. Bevorzugt sind γ-Acryl- bzw. γ-Methacryloxypropyltri(alkoxy)silane, α-Methacryloxymethyltri(alkoxy)silane, γ-Methacryloxypropylmethyldi(alkoxy)silane, Vinylalkyldi(alkoxy)silane und Vinyltri(alkoxy)silane, wobei als Alkoxygruppen beispielsweise Methoxy-, Ethoxy-, Methoxyethylen, Ethoxyethylen-, Methoxypropylenglykolether- bzw. Ethoxypropylenglykolether-Reste eingesetzt werden können. Beispiele für geeignete Siliciumverbindungen c) sind Vinyltrimethoxysilan, Vinylmethyldimethoxysilan, Vinyltriethoxysilan, Vinylmethyldiethoxysilan, Vinyltripropoxysilan, Vinyltriisopropoxysilan, Vinyltris-(1-methoxy)-isopropoxysilan, Vinyltributoxysilan, Vinyltriacetoxysilan, 3-Methacryloxypropyltrimethoxysilan, 3-Methacryloxypropylmethyldimethoxysilan, Methacryloxymethyltrimethoxysilan, 3-Methacryloxypropyl-tris(2-methoxyethoxy)silan, Vinyltrichorsilan, Vinylmethyldichlorsilan, Vinyltris-(2-methoxyethoxy)silan, Trisacetoxyvinylsilan, 3-(Triethoxysilyl)-propylbernsteinsäureanhydridsilan.

Geeignet sind auch funktionalisierte, hydrolysierbare Siliciumverbindungen aus der Gruppe der Epoxysilane und Aminosilane, die während der Polymerisation zugegeben werden, wie Glycidoxypropyltrimethoxysilan, Glycidoxypropyltriethoxysilan, 3-(2-Aminoethylamino)propyltrimethoxysilan, 3-(2-Aminoethylamino)-propylmethyldimethoxysilan.

Geeignete Silanverbindungen c) sind insbesondere auch kettenübertragend wirkende Mercaptosilane der allgemeinen Formel HS-(CR⁴₂)₁₋₃ -SiR⁵₃,wobei R⁴ gleich oder verschieden ist und die Bedeutung H und C₁- bis C₆-Alkylgruppe, R⁵ gleich oder verschieden ist und die Bedeutung C₁- bis C₆-Alkylgruppe und C₁bis C₆-Alkoxygruppe hat, wobei mindestens einer der Reste R⁵ eine Alkoxygruppe ist. Bevorzugt werden 3-Mercaptopropyltriethoxysilan, 3-Mercaptopropyltrimethoxysilan und 3-Mercaptopropylmethyldimethoxysilan.

Als Silane c) werden am meisten bevorzugt Vinyltrimethoxysilan, Vinylmethyldimethoxysilan, Vinyltriethoxysilan, Vinylmethyldiethoxysilan, Vinyltris-(1-methoxy)-isopropoxysilan, Methacryloxypropyl-tris(2-methoxyethoxy)silan, 3-(Triethoxysilyl)propyl-bernsteinsäureanhydridsilan, 3-Mercaptopropyltrimethoxysilan. Glycidoxypropyltrimethoxysilan, Glycidoxypropyltriethoxysilan, 3-Methacryloxypropyltrimethoxysilan, 3-Methacryloxypropylmethyldimethoxysilan und Methacryloxymethyltrimethoxysilan sowie deren Gemische, insbesondere Gemische von 2 oder mehreren Silanen aus der Gruppe umfassend von 3-Methacryloxypropyltrimethoxysilan oder Methacryloxymethyltrimethoxysilan mit Vinyltrimethoxysilan, Vinyltriethoxysilan und/oder 3-Mercaptopropyltrimethoxysilan und/oder Glycidoxypropyltriethoxysilan. Der Gehalt an Silanen c) beträgt vorzugsweise 0.05 bis 3.5 Gew.-%, besonders bevorzugt 0.1 bis 1 Gew.-%, am meisten bevorzugt 0.1 bis 0.6 Gew.-%, jeweils bezogen auf das Gesamtgewicht der eingesetzten Monomere a) bis d).

Geeignete Epoxidgruppen enthaltende Comonomere d) sind Glycidylacrylat, Glycidylmethacrylat, Allylglycidether, Vinylglycidether, Vinylcyclohexenoxid, Limonenoxid, Myrcenoxid, Caryophyllenoxid. Bevorzugt werden Glycidylacrylat, Glycidylmethacrylat, Allylglycidether, Vinylglycidether. Der Gehalt an Epoxyverbindungen beträgt 0.05 bis 5 Gew.-%, bevorzugt 0.25 bis 1.5 Gew.-%, besonders bevorzugt 0.4 bis 1.2 Gew.-%, jeweils bezogen auf das Gesamtgewicht der eingesetzten Monomere. Am meisten bevorzugt werden Copolymerisate mit einer Kombination von 0.1 bis 1.0 Gew.-% Comonomer c) mit 0.25 bis 1.5 Gew.-% Comonomer d), insbesondere Kombinationen mit 0.1 bis 0.6 Gew.-% Comonomer c) mit 0.4 bis 1.2 Gew.-% Comonomer d).

Die Dispersionen werden mittels radikalischer Polymerisation in wässrigem Medium, vorzugsweise Emulsionspolymerisation, hergestellt. Die Polymerisation wird üblicherweise in einem Temperaturintervall von 20'°C bis 100°C durchgeführt, insbesondere zwischen 45°C und 80°C. Die Initiierung erfolgt mittels der gebräuchlichen Radikalbildner, welche vorzugsweise in Mengen von 0.01 bis 3.0 Gew.-%, bezogen auf das Gesamtgewicht der Monomere, eingesetzt werden. Als Initiatoren werden vorzugsweise anorganische Peroxide wie Ammonium-, Natrium-, Kaliumperoxodisulfat oder Wasserstoffperoxid entweder alleine oder in Kombination mit Reduktionsmitteln.wie Natriumsulfit, Natriumhydrogensulfit, Natriumformaldehydsulfoxylat oder Ascorbinsäure verwendet. Es können auch wasserlösliche organische Peroxide, beispielsweise t-Butylhydroperoxid, Cumolhydroperoxid, üblicherweise in Kombination mit Reduktionsmittel, eingesetzt werden, oder aber auch wasserlösliche Azoverbindungen. Bei der Copolymerisation mit gasförmigen Monomeren wie Ethylen und Vinylchlorid wird unter Druck gearbeitet, im allgemeinen zwischen 5 und 100 bar_{abs.}.

Zur Stabilisierung der Dispersion können anionische und nichtionische Emulgatoren sowie Schutzkolloide verwendet werden. Bevorzugt werden nichtionische oder anionische Emulgatoren eingesetzt, vorzugsweise eine Mischung aus nichtionischen und anionischen Emulgatoren. Als nichtionische Emulgatoren werden bevorzugt Kondensationsprodukte von Ethylenoxid oder Propylenoxid mit linearen oder verzweigten Alkoholen mit, 8 bis 18 Kohlenstoffatomen, Alkylphenolen oder linearen oder verzweigten Carbonsäuren von 8 bis 18 Kohlenstoffatomen eingesetzt, sowie Blockcopolymere von Ethylenoxid und Propylenoxid eingesetzt. Geeignete anionische Emulgatoren sind beispielsweise Alkylsulfate, Alkylsulfonate, Alkylarylsulfate, sowie Sulfate oder Phosphate von Kondensationsprodukten des Ethylenoxides mit linearen oder verzweigten Alkylalkoholen und mit 5 bis 25 EO-Einheiten, Alkylphenolen, und Mono- oder Diester der Sulfobernsteinsäure. Die Emulgatormenge beträgt 0.5 bis 10 Gew.-%, bezogen auf das Gesamtgewicht der eingesetzten Monomere a).

Gegebenenfalls können noch Schutzkolloide eingesetzt werden. Beispiele für geeignete Schutzkolloide sind Polyvinylalkohole mit einem Gehalt von 75 bis 95 Mol-%, bevorzugt 84 bis 92 Mol-%, Vinylalkoholeinheiten; Poly-N-Vinylamide wie Polyvinylpyrrolidone; Polysaccharide wie Stärken, sowie Cellulosen und deren Carboxymethyl-, Methyl-, Hydroxyethyl-, Hydroxypropyl-Derivate; synthetische Polymere wie Poly(meth)acrylsäure, Poly(meth)acrylamid. Besonders bevorzugt wird der Einsatz der genannten Polyvinylalkohole. Die Schutzkolloide werden im allgemeinen in einer Menge von 0.5 bis 10 Gew.-%, bezogen auf das Gesamtgewicht der eingesetzten Monomere a), eingesetzt.

Gegebenenfalls können zur Steuerung des Molekulargewichts die üblichen Regler verwendet werden, beispielsweise Alkohole wie Isopropanol, Aldehyde wie Acetaldehyd, chlorhaltige Verbindungen, Mercaptane wie n-Dodecylmercaptan, t-Dodecylmercaptan, Mercaptopropionsäure(ester). (ester). Zur Einstellung des pH-Wertes können bei der Herstellung der Dispersion pH-regulierende Verbindungen wie Natriumacetat oder Ameisensäure eingesetzt werden.

Die Polymerisation kann unabhängig vom Polymerisationsverfahren mit oder ohne Verwendung von Saatlatices, unter Vorlage aller oder einzelner Bestandteile des Reaktionsgemisches, oder unter teilweiser Vorlage und Nachdosierung der oder einzelner Bestandteile des Reaktionsgemisches, oder nach dem Dosierverfahren ohne Vorlage durchgeführt werden. Die Comonomeren a), b), c) und d) können zur Herstellung der Dispersion alle vorgelegt werden (Batch-Prozess), oder es wird ein Teil der Monomeren vorgelegt und der Rest dosiert (Semibatch-Prozess). Bevorzugt wird der gesamte Silikonanteil b) mit einem Teil der Monomeren a), vorzugsweise bis zu 30 Gew.-% des Monomeranteils a), vorgelegt und gut emulgiert. Das restliche Monomer a) wird zudosiert. Der Zeitpunkt der Zugabe des Silikons ist von Bedeutung, da der Vernetzungsgrad, die Teilchengrößenverteilungund die Homogenität des Emulsionspolymers maßgeblich davon abhängen. Die besten Resultate werden dann erzielt, wenn der Silikonanteil b) komplett in der Vorlage eingesetzt wird. Bei der Copolymerisation von gasförmigen Monomeren a) wie Ethylen wird die gewünschte Menge durch die Einstellung eines bestimmten Drucks eingebracht. Der Druck, mit dem das gasförmige Monomer eingebracht wird, kann anfangs auf einen bestimmten Wert eingestellt werden und sich während der Polymerisation abbauen, oder der Druck wird während der gesamten Polymerisation konstant gelassen. Letztere Ausführungsform ist bevorzugt.

Bevorzugt wird der Silananteil c) insgesamt während der Polymerisation vermischt mit einem Teil der Monomeren a) zudosiert und der Epoxidanteil d) ebenfalls insgesamt zudosiert. Besonders bevorzugt wird der Epoxidanteil d) gegen Ende der Polymerisation, bei einem Umsatz von 80 bis 100 %, zudosiert. Eine weitere bevorzugte Ausführungsform betrifft die Dosierung eines Gemisches von zwei oder mehreren verschiedenen Silanen c). Zum Beispiel werden zunächst eines oder mehrere Silane kontinuierlich zudosiert und ein weiteres, anderes Silan wird zusammen mit dem Epoxidanteil nach Beendigung der Dosierung des/der ersten Silans/Silane zudosiert. Die zur Stabilisierung der Dispersion eingesetzten Emulgatoren und gegebenenfalls Schutzkolloide können alle in der Vorlage vorgelegt werden oder teilweise vorgelegt werden und der Rest während der Polymerisation dosiert werden. Dabei können die oberflächenaktiven Substanzen allein oder als Voremulsion mit den Comonomeren dosiert werden.

Nach Abschluß der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere und weitere flüchtige, nicht wäßrige Bestandteile der Dispersion können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die mit dem erfindungsgemäßen Verfahren erhältlichen wässrigen Dispersionen haben einen Feststoffgehalt von 40 bis 70 Gew.-%, vorzugsweise von 50 bis 65 Gew.-%. Zur Herstellung von in Wasser redispergierbaren Polymerpulvern werden die wässrigen Dispersionen, gegebenenfalls nach Zusatz von Schutzkolloiden als Verdüsungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

In der Regel wird die Verdüsungshilfe in einer Gesamtmenge von 3 bis 30 Gew.-%, bezogen auf die polymeren Bestandteile der Dispersion, eingesetzt. Geeignete Verdüsungshilfen sind die bereits genannten Schutzkolloide. Bei der Verdüsung hat sich vielfach ein Gehalt von bis zu 1.5 Gew.-% Antischaummittel, bezogen auf das Basispolymerisat, als günstig erwiesen. Zur Verbesserung der Verblockungsstabilität kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Silicate.

Mit der erfindungsgemäßen Vorgehensweise werden Copolymerisate zugänglich, die zu Beschichtungen mit hoher Nassabriebsfestigkeit führen. Überdies wird mit einer geeigneten Auswahl der Monomeren a) und b) eine hohe Hydrophobie erzielt. Es werden demnach Emulsionspolymerisate erhalten, die witterungsstabil, wasserabweisend, sehr beständig, besonders gegenüber Alkalien, und nicht verschmutzend sind und darüber hinaus eine gute Wasserdampfdurchlässigkeit aufweisen, so dass diese auch für den-Ausseneinsatz, z.B. im Baubereich in Farben und Putzen, erfolgreich verwendet werden können. Somit können die erfindungsgemäßen Polymere universell eingesetzt werden.

Die funktionalisierten Copolymerisate in Form deren wässrigen Dispersionen und in Wasser redispergierbaren Pulver eignen sich zur Anwendung in Klebemitteln und Beschichtungsmitteln zur Verfestigung von Fasern oder anderen partikulären Materialien, beispielsweise für den Textilbereich. Sie eignen sich auch als Modifizierungsmittel und als Hydrophobierungsmittel. Sie sind weiter geeignet als Bindemittel in Klebemitteln und Beschichtungsmitteln, auch als Schutzbeschichtung z.B. für Metalle oder Releasebeschichtung z.B. zur Papierbehandlung. Besonders geeignet sind sie als Bindemittel für Anstrich-, Klebe- und Beschichtungsmittel im Baubereich, beispielsweise in Fliesenklebern und Vollwärmeschutzklebemittel, und insbesondere für die Anwendung in emissionsarmen Kunststoffdispersionsfarben und Kunststoffdispersionsputzen, sowohl für den Innenbereich wie den Aussenbereich. Die Rezepturen für Dispersionsfarben und Dispersionsputze sind dem Fachmann bekannt, und enthalten im allgemeinen 5 bis 50 Gew.-% des funktionalisierten, mit Silikon hydrophob modifizierten Copolymerisats, 5 bis 35 Gew.-% Wasser, 5 bis 80 Gew.-% Füllstoff, 5 bis 30 Gew.-% Pigmente sowie 0.1 bis 10 Gew.-% weitere Zusatzstoffe, wobei sich die Angaben in Gew.-% in der Rezeptur auf 100 Gew.-% aufaddieren.

Beispiele für einsetzbare Füllstoffe sind Carbonate wie Calciumcarbonat in Form von Dolomit, Calcit und Kreide. Weitere Beispiele sind Silikate, wie Magnesiumsilikat in Form von Talkum, oder Aluminiumsilikate wie Lehm und Tone; Quarzmehl, Quarzsand, hochdisperse Kieselsäure, Feldspat, Schwerspat und Leichtspat. Geeignet sind auch Faserfüllstoffe. In der Praxis werden häufig Gemische verschiedener Füllstoffe eingesetzt. Beispielsweise Gemische von Füllstoffen unterschiedlicher Teilchengröße oder Gemische von carbonatischen und silikatischen Füllstoffen. Im letzteren Fall spricht man bei einem Anteil von mehr als 50 Gew.-%, insbesondere mehr als 75 Gew.-% Carbonat bzw. Silikat am Gesamtfüllstoffanteil von carbonatreichen bzw. silikatreichen Rezepturen. Kunststoffputze enthalten im allgemeinen grobkörnigere Füllstoffe als Dispersionsfarben. Die Körnung liegt dabei oftmals zwischen 0.2 und 5.0 mm. Ansonsten können Kunststoffputze die selben Zusatzstoffe wie Dispersionsfarben enthalten.

Geeignete Pigmente sind beispielsweise Titandioxid, Zinkoxid, Eisenoxide, Ruß als anorganische Pigmente, sowie die gebräuchlichen organischen Pigmente. Beispiele für weitere Zusatzstoffe sind Netzmittel in Anteilen von im allgemeinen 0.1 bis 0.5 Gew.-%, bezogen auf das Gesamtgewicht der Rezeptur. Beispiele hierfür sind Natrium- und Kaliumpolyphosphate, Polyacrylsäuren und deren Salze. Als Zusatzstoffe/sind auch Verdickungsmittel zu nennen, welche im allgemeinen in einer Menge von 0.01 bis 2.0 Gew.-%, bezogen auf das Gesamtgewicht der Rezeptur, eingesetzt werden. Gebräuchliche Verdickungsmittel sind Celluloseether, Stärken, oder Bentonit als Beispiel für ein anorganisches Verdickungsmittel. Weitere Zusatzstoffe sind Konservierungsmittel, Entschäumer, Gefrierschutzmittel.

Zur Herstellung der Klebe- und Beschichtungsmittel wird die Polymerdispersion oder das Polymerpulver mit den weiteren Rezepturbestandteilen Füllstoff und weiteren Zuschlägen in geeigneten Mischern gemischt und homogenisiert. Das Polymerpulver kann gegebenenfalls auch in Form einer wäßrigen Redispersion auf der Baustelle zugegeben werden. In vielen Fällen wird eine Trockenmischung hergestellt und das zur Verarbeitung erforderliche Wasser unmittelbar vor der Verarbeitung hinzugefügt. Bei der Herstellung von pastösen Massen wird häufig zunächst der Wasseranteil vorgelegt, die Dispersion zugegeben und abschließend die Feststoffe eingerührt.

Bei der Verwendung in Beschichtungsmittel zeichnen sich die funktionalisierten, mit Silikon hydrophob modifizierten Copolymerisate vor allem auch dadurch aus, daß diese auch bei einer hohen Pigmentvolumenkonzentration (PVK), das heißt in hochgefüllten und überkritisch formulierten Zusammensetzungen-(PVK > 65 %), noch hohe Naßabriebsfestigkeiten garantieren. Im allgemeinen beträgt die PVK ≥ 50 %, bevorzugt 60 bis 85 % und errechnet sich mit PVK (%) = (V_{P+F} x 100) / / (V_{P+F} + V_{B}) mit V_{P+F} = Volumen Pigment + Füllstoff und V_{B} = Volumen Bindemittel. Besonders vorteilhaft sind die funktionalisierten Copolymerisate als Bindemittel in Beschichtungsmittel-Rezepturen für emissionsarme Innenfarben, insbesondere solchen mit hoher PVK (hochgefüllte Farben), oder als hydrophobierend wirkendes Bindemittel für Putze geeignet.

Die nachfolgenden Beispiele dienen zur weiteren Erläuterung der Erfindung, ohne diese in irgendeiner Weise einzuschränken.

### Beispiele 1 bis 12:

In den Beispielen 1 bis 12 wurden Vinylacetat-Ethylen-Copolymerisat-Dispersionen mit einer MFT von ca. 1°C hergestellt.
Genapol X 150: _{,}
   Ethoxylierter Isotridecylalkohol mit einem Ethoxylierungsgrad von 15.
Mersolat:
   Na-Alkylsulfonat mit 12 bis 14 C-Atomen im Alkylrest.
Airvol 523:
   Polyvinylalkohol mit einer Viskosität von ca. 25 mPas (20°C, 4 %-ige Lösung, gemessen nach Höppler) und einer Verseifungszahl von 140 (mg KOH/g Polymer) (Hydrolysegrad 88 Mol-%).
PDMS:
   Polydimethylsiloxan mit einer Kettenlänge von ca. 100
PDMS-Mischung:
   Gemisch dreier Polydimethylsiloxane mit ca. 100 SiOMe₂-Einhei-ten, das 5 Gew.-% unfunktionalisiertes Polydimethylsiloxan, 20 Gew.-% α-monovinyl-funktionalisiertes Polydimethylsiloxan und 75 Gew.-% α,ω-divinyl-funktionalisiertes Polydimethylsiloxan enthält.

### Beispiel 1:

In einem 572 Liter Druckautoklaven wurden 73.35 kg Wasser, 26.92 kg Airvol 523 (Polyvinylalkohol; 10 %-ige Lösung), 4.76 kg Genapol X 150 (40 %-ige wässrige Lösung), 219.15 g Natriumacetat (100 %-ig), 3.41 kg Mersolat (40 %-ige wässrige Lösung), 1.91 kg Natriumvinylsulfonat (25 %-ig), 23.82 kg Vinylacetat, 4.76 kg PDMS-Mischung und 23.82 kg VeoVa 10 vorgelegt. Mit 10 %-iger Ameisensäure wurde auf pH = 5 eingestellt. Ferner wurden 314 ml Trilon B (EDTA; 2 %-ige wässrige Lösung) und 991 ml Eisenammonsulfat (1 %-ige Lösung) zugegeben. Der Kessel wurde auf 70°C aufgeheizt und es wurden 20 bar Ethylen aufgedrückt. Sobald sich der Reaktor im thermischen Gleichgewicht befand, wurde eine 10.0 %-ige Ammoniumpersulfatlösung (APS-Lösung) mit 1023 g pro Stunde und eine 5.05 %-ige Natriumsulfitlösung mit 1976 g pro Stunde eingefahren. 25 Minuten später wurde begonnen, eine Mischung von 164.36 kg Vinylacetat, 23.82 kg VeoVa 10 und 1.22 kg Vinyltrimethoxysilan (Wacker Silan XL 10) mit einer Rate von 29.14 .kg pro Stunde zu dosieren (Monomerdosierung).
Gleichzeitig wurde eine Emulgatordosierung mit einer Dosierleistung von 10.92 kg pro Stunde eingefahren. Die Emulgatordosierung enthielt 45.34 kg Wasser, 24.94 kg Genapol X 150 (40 %-ige wässrige Lösung) und 714.62 g Natriumacetat. Die Gesamtdosierzeit für beide Dosierungen belief sich auf 6.5 Stunden. 15 min nach dem Reaktionsbeginn wurde die APS-Dosierung auf 636 g pro Stunde, die Na-Sulfit-Dosierung auf 1226 g pro Stunde reduziert.
30 Minuten nach dem Ende der Vinylacetat- und der Emulgatordosierung wurde die "GMA-Dosierung" eingefahren. Zusammensetzung der "GMA-Dosierung": 4.76 kg Wasser, 70.27 g Genapol X 150 und 2.86 kg Glycidylmethacrylat. Die Dosierzeit betrug 30 Minuten (Rate: 15.4 kg pro Stunde). Nach dem Ende der "GMA-Dosierung" wurde die APS- und Na-Sulfitdosierung noch 1 Stunde fortgesetzt. Nach dem Entspannen wurde die Dispersion zur Restmonomerminimierung mit Wasserdampf behandelt ("gestrippt") und anschließend mit Hydorol W konserviert.

### Dispersionsanalysen:

Feststoffgehalt: 57.8 %, pH-Wert: 5.31; Brookfield-Viskosität 20 (Spindel 4): 1920 mPas; MFT: 1°C; Glasübergangstemperatur Tg: 5.4°C; mittlere Teilchengröße: 375.1 nm (Nanosizer); Dichte: 1.059 g/ml

### Beispiel 2:

Wie Beispiel 1 mit dem Unterschied, dass die Vorlage 3.0 kg PDMS-Mischung (statt 4.76 kg wie in Beispiel 1) enthielt.

### Dispersionsanalysen:

Feststoffgehalt: 57.9 %, pH-Wert: 5.15; Brookfield-Viskosität 20 (Spindel 5): 2240 mPas; MFT: 1°C; Glasübergangstemperatur Tg: 5.1°C; mittlere Teilchengröße: 421.0 nm (Nanosizer); Dichte: 1.062 g/ml

### Beispiel 3:

Wie Beispiel 1 mit dem Unterschied, dass die Vorlage 1.21 kg PDMS-Mischung (statt 4.76 kg wie in Beispiel 1) enthielt.

### Dispersionsanalysen:

Feststoffgehalt: 58.5 %, pH-Wert: 5.26; Brookfield-Viskosität 20 (Spindel 4): 1130 mPas; MFT: 1°C; Glasübergangstemperatur Tg: 5.3°C; mittlere Teilchengröße: 363.3 nm (Nanosizer); Dichte: 1.065 g/ml

### Vergleichsbeispiel 4:

Wie Beispiel 1 mit dem Unterschied, dass ohne Silikonkomponente b) polymerisiert wurde. Im Gegensatz zu Beispiel 1 wurde ferner der Polyvinylalkohol Airvol 523 (10 %-ige Lösung) aus der Vorlage genommen und es wurden 26.92 kg in die Emulgatordosierung gegeben.

### Dispersionsanalysen:

Feststoffgehalt: 59.5 %, pH-Wert: 5.04; Brookfield-Viskosität 20 (Spindel 3): 2160 mPas; MFT: 1°C; Glasübergangstemperatur Tg: 5.0°C; mittlere Teilchengröße: 320.1 nm (Nanosizer); Dichte: 1.075 g/ml

### Beispiel 5:

Wie Beispiel 1 mit dem Unterschied, dass anstelle von 23.82 kg nur 14.92 kg VeoVa 10 vorgelegt wurde, und anstelle von 23.82 kg nur 14.92 kg VeoVa 10 zudosiert wurde.

### Dispersionsanalysen:

Feststoffgehalt: 59.0 %, pH-Wert: 5.12; Brookfield-Viskosität 20 (Spindel 4): 1660 mPas; MFT: 1°C; Glasübergangstemperatur Tg: 6.4°C; mittlere Teilchengröße: 465.0 nm (Nanosizer); Dichte: 1.062 g/ml

### Beispiel 6:

Wie Beispiel 5 mit dem Unterschied, dass die Vorlage nur 2.98 kg Silikonkomponente b) (statt 4.77 kg wie in Beispiel 5) enthielt.

### Dispersionsanalysen:

Feststoffgehalt: 59.2 %, pH-Wert: 5.35; Brookfield-Viskosität 20 (Spindel 5): 1840 mPas; MFT: 1°C; Glasübergangstemperatur Tg: 6.4°C; mittlere Teilchengröße: 419.4 nm (Nanosizer); Dichte: 1.067 g/ml

### Beispiel 7:

Wie Beispiel 5 mit dem Unterschied, dass die Vorlage 1.19 kg Silikonkomponente b) (statt 4.77 kg wie in Beispiel 5) enthielt.

### Dispersionsanalysen:

Feststoffgehalt: 59.0 %, pH-Wert: 5.30; Brookfield-Viskosität 20 (Spindel 4): 1520 mPas; MFT: 1°C; Glasübergangstemperatur Tg: 7.9°C; mittlere Teilchengröße: 424.2 nm (Nanosizer); Dichte: 1.072 g/ml

### Beispiel 8:

In einem 15.7 Liter Druckautoklaven wurden 1.76 kg Wasser, 122.44 g Genapol X 150 (40 %-ige wässrige Lösung), 5.63 g Natriumacetat (100 %-ig), 113.53 g Mersolat (40 %-ige wässrige Lösung), 48.98 g Natriumvinylsulfonat (25 %-ig), 581.60 g Vinylacetat und 30.61 g PDMS-Mischung vorgelegt. Mit 10 %-iger Ameisensäure wurde auf pH = 5 eingestellt. Ferner wurden 9.7 ml Trilon B (EDTA; 2 %-ige wässrige Lösung) und 30.6 ml Eisenammonsulfat (1 %-ige Lösung) zugegeben. Der Kessel wurde auf 70°C aufgeheizt und es wurden 22 bar Ethylen aufgedrückt. Sobald sich der Reaktor im thermischen Gleichgewicht befand, wurde eine 5.4 %-ige Ammoniumpersulfatlösung (APS-Lösung) mit 70 g pro Stunde und eine 4.16 %-ige Natriumsulfitlösung mit 85 g pro Stunde eingefahren. 25 Minuten später wurde begonnen, eine Mischung von 5.51 kg Vinylacetat und 31.24 kg Vinyltrimethoxysilan (Wacker Silan XL 10) mit einer Rate von 852.4 g pro Stunde zu dosieren (Monomerdosierung).
Gleichzeitig wurde eine Emulgatordosierung mit einer Dosierleistung von 537 g pro Stunde eingefahren. Die Emulgatordosierung enthielt 2.04 kg Wasser, 795.87 g Airvol 523 (Polyvinylalkohol; 10 %-ige Lösung), 633.64 g Genapol X 150 (40 %-ige wässrige Lösung) und 18.37 g Natriumacetat. Die Gesamtdosierzeit für beide Dosierungen belief sich auf 6.5 Stunden.
15 min nach dem Reaktionsbeginn wurde die APS-Dosierung auf 43.3 g pro Stunde, die Na-Sulfit-Dosierung auf 52.7 g pro Stunde reduziert.
30 Minuten nach dem Ende der Vinylacetat- und der Emulgatordosierung wurde die "GMA-Dosierung" eingefahren. Zusammensetzung der "GMA-Dosierung": 122.44 g Wasser, 9.18 g Genapol X 150 und 73.47 g Glycidylmethacrylat. Die Dosierzeit betrug 30 Minuten (Rate: 411.0 g pro Stunde). Nach dem Ende der "GMA-Dosierung" wurde die APS- und Na-Sulfitdosierung noch 1 Stunde fortgesetzt. Nach dem Entspannen wurde die Dispersion zur Restmonomerminimierung mit Wasserdampf behandelt ("gestrippt") und anschließend mit Hydorol W konserviert.

### Dispersionsanalysen:

Feststoffgehalt: 48.8 %, pH-Wert: 5.17; Brookfield-Viskosität 20 (Spindel 3): 500 mPas; MFT: 1°C; Glasübergangstemperatur Tg: 4.8°C; mittlere Teilchengröße: 359.2 nm (Nanosizer); Dichte: 1.066 g/ml

### Vergleichsbeispiel 9:

Wie Beispiel 8 mit dem Unterschied, dass die Vorlage keine Silikonkomponente b) (statt 30.61 g wie in Beispiel 8) enthielt .

### Dispersionsanalysen:

Feststoffgehalt: 49.6 %, pH-Wert: 5.35; Brookfield-Viskosität 20 (Spindel 3): 1210 mPas; MFT: 1°C; Glasübergangstemperatur Tg: 8.3°C; mittlere Teilchengröße: 378.3 nm (Nanosizer); Dichte: 1.074 g/ml

### Vergleichsbeispiel 10:

Wie Beispiel 1 mit dem Unterschied, dass kein Silan c) (statt 1.22 kg Vinyltrimethoxysilan wie in Beispiel 1) und kein Epoxid d) (statt 2.86 kg wie in Beispiel 1) eingesetzt wurden.

### Dispersionsanalysen:

Feststoffgehalt: 58.9 %, pH-Wert: 5.27; Brookfield-Viskosität 20 (Spindel 5): 2420 mPas; MFT: 1°C; Glasübergangstemperatur Tg: 5.9°C; mittlere Teilchengröße: 408.2 nm (Nanosizer); Dichte: 1.063 g/ml

### Vergleichsbeispiel 11:

Wie Beispiel 1 mit dem Unterschied, dass die Vorlage 4.76 kg unfunktionalisiertes und damit nicht polymerisierbares Polydimethylsiloxan (PDMS) enthielt.

### Dispersionsanalysen:

Feststoffgehalt: 59.3 %, pH-Wert: 5.36; Brookfield-Viskosität 20 (Spindel 5): 2180 mPas; MFT: 1°C; Glasübergangstemperatur Tg: 4.9°C; mittlere Teilchengröße: 478.9 nm (Nanosizer); Dichte: 1.059 g/ml

### Beispiel 12:

Wie Beispiel 1 mit dem Unterschied, dass die Vorlage 4.76 kg α,ω-Divinyl-Polydimethylsiloxan (Kettenlänge ca. 100) statt 4.76 kg PDMS-Mischung wie in Beispiel 1) enthielt.

### Dispersionsanalysen:

Feststoffgehalt: 58.5 %, pH-Wert: 5.19; Brookfield-Viskosität 20 (Spindel 5): 2150 mPas; MFT: 1°C; Glasübergangstemperatur Tg: 5.9°C; mittlere Teilchengröße: 399,2 nm (Nanosizer); Dichte: 1.060 g/ml

Mit den Dispersionen wurden Farben in einer silikatreichen Rezeptur 1 ( Silikat/Carbonat = 180/43 Gew.-Teile) und einer carbonatreichen Rezeptur 2 (Carbonat/Silikat = 260/80 Gew.-Teile) gemäß der nachfolgend dargestellten Rezepturen hergestellt (Tabellen 1 und 2):

**Tabelle 1:**

| Farbrezeptur 1 (silikatreich): | |
|---|---|
| Wasser | 300 |
| Celluloseether (Tylose H 6000 YP) | 6 |
| Dispergiermittel (Dispex N 40) | 5 |
| Dispergiermittel (Calgon N) | 5 |
| Natriumhydroxid (10 %-ig) | 1 |
| Konservierungsmittel (Hydorol W) | 1 |
| Entschäumer (Agitan 260) | 4 |
| Magnesiumsilikat (Talkum N) | 30 |
| Titandioxid-Pigment (Kronos 2300) | 250 |
| Aluminiumsilikat gefällt (P 820) | 50 |
| Aluminiumsilikat (China-Clay B) | 100 |
| Calciumcarbonat gefällt (Socal P2) | 13 |
| Dolomit (Microdol 1) | 30 |
| Polymerdispersion | 200 |
| Entschäumer (Agitan 260) | 5 |
| Summe der Gewichtsteile | 1000 |

**Tabelle 2:**

| Farbrezeptur 2 (carbonatreich) : | |
|---|---|
| Wasser | 423 |
| Celluloseether (Tylose H6000YP) | 6 |
| Dispergiermittel (Dispex N 40) | 5 |
| Dispergiermittel (Calgon N) | 5 |
| Natriumhydroxid (10 %-ig) | 1 |
| Konservierungsmittel (Hydorol W) | 1 |
| Entschäumer (Agitan 260) | 4 |
| Magnesiumsilikat (Talkum N) | 80 |
| Titandioxid-Pigment (Kronos 2300) | 100 |
| Calciumcarbonat (Omaycarb 2 GU) | 70 |
| Calciumcarbonat (Omyacarb 5 GU) | 70 |
| Calciumcarbonat gefällt (Socal P2) | 70 |
| Dolomit (Microdol 1) | 50 |
| Polymerdispersion | 110 |
| Entschäumer (Agitan 260) | 5 |
| Summe der Gewichtsteile | 1000 |

Mit den Dispersionen wurden ferner Putze gemäß der nachfolgend dargestellten Rezeptur hergestellt (Tabelle 3) :

**Tabelle 3:**

| Putzrezeptur 3 | |
|---|---|
| Wasser | 91.2 |
| Dispergiermittel (Dispex N 40) | 2 |
| Fungizid (Parmetol A23) | 2 |
| Schichtsilikat-Verdicker (Bentone EW, 5 %ig) | 15 |
| Methylcellulose-Verdicker (Tylose MH 10000 KG 4, 2 %ig) | 30 |
| Acrylat-Verdicker (Rohagit SD 15) | 1 |
| Algizid (Algon P) | 1 |
| Ammoniak | 0.5 |
| Cellulosefaser (Arbocel B400) | 3 |
| Dralonfaser (Dralonfaser 6.7/4mm) | 2 |
| Titandioxid (Kronos 2190) | 20 |
| Kieselgur (Celite 281) | 40 |
| Kreide (Calcilit 100) | 360 |
| Kreide (Calcilit 1.5-2mm) | 320 |
| Entschäumer (Agitan 260) | 1 |
| Polymerdispersion | 111.3 |
| Summe der Gewichtsteile | 1000 |

Anwendungstechnische Prüfungen :
a) Prüfung der Nassabriebsbeständigkeit
   Mit der silikatreichen Farbrezeptur 1 und der carbonatreichen Farbrezeptur 2 wurde die Nassabriebfestigkeit mittels der Vliesmethode (ISO 11998) getestet. Dazu wurde die Abtragung der Beschichtung nach 28 Tagen Lagerung (28d) über den Massenverlust des Farbfilms bestimmt. Aus der Farbdichte, der gescheuerten Fläche und dem Massenverlust des Farbfilms wurde dann der Farbabtrag in µm errechnet.
b) Prüfung der Hydrophobie mittels Wassertropfentest
   Ein Putz, hergestellt nach der obigen Rezeptur 3, wurde mit einer Spachtel auf 3 herkömmliche, im Handel erhältliche Kalksandsteine (Maße: 10 x 10 x 5 cm) auf Korngröße (ca. 2 mm, insgesamt ca. 30 bis 40 g Putz pro Stein) aufgezogen. Nach dem Trocknen wurde nach einem Tag und nochmals nach 7 Tagen mit einer Spritze 1 ml Wasser in Form eines Tropfens auf den Putz aufgesetzt. Es wurde die Zeit gestoppt (Angabe in min), bis der Tropfen verlaufen und damit verschwunden war. Je länger diese Zeit ist, umso höher ist die Hydrophobie und die Wasserbeständigkeit des Putzes bzw. der darin enthaltenden Dispersion. Bei einer hydrophilen Dispersion ist der Tropfen nach spätestens 10 Minuten verschwunden, während er bei hydrophoben Dispersionen mehrere Stunden lang stehen bleibt.

Tabelle 4 enthält eine Zusammenfassung der Zusammensetzung der Dispersionen, der Bestimmung der Nassabriebsbeständigkeit in Rezeptur 1 und 2 und die Bestimmung der Hydrophobie mit der Rezeptur 3 .

Bei Silikon wurde PMDS-Mischung mit D, unfunktionalisiertes PMDS mit P und α,ω-Divinyl-Polydimethysiloxan mit Y bezeichnet.
VeoVa: VeoVa 10, Vinylester von α-verzweigter C₁₀-Monocarbonsäure
VTS: Vinyltrimethoxysilan
GMA: Glycidylmethacrylat
NA (µm) / 28 d; 1:
   Testung des Nassabriebs mit Vliesmethode, nach 28 Tagen Lagerung mit Farbrezeptur 1
NA (µm) / 28 d; 2:
   Testung des Nassabriebs mit Vliesmethode, nach 28 Tagen Lagerung mit Farbrezeptur 2
H (min) /1 d (7 d):
   Testung der Hydrophobie mit Wassertropfentest mit Putzrezeptur 3 nach einem bzw. sieben Tagen

**Tabelle 4:**

| Bsp. | VeoVa Gew% | Silikon Gew% | VTS Gew% | GMA Gew% | NA (µm) 28 d; 1 | NA (µm) 28 d; 2 | H (min) 1 d | H (min) 7 d |
|---|---|---|---|---|---|---|---|---|
| 1 | 20 | 2 D | 0.5 | 1.2 | 8.7 | 38.0 | 400 | 410 |
| 2 | 20 | 1.25 D | 0.5 | 1:2 | 8.5 | 32.8 | 350 | 360 |
| 3 | 20 | 0.5 D | 0.5 | 1.2 | 9.2 | 39.6 | 230 | 250 |
| V4 | 20 | - | 0.5 | 1.2 | 9.7 | 31.7 | 150 | 100 |
| 5 | 12.5 | 2 D | .0.5 | 1.2 | 7.8 | 42.2 | 280 | 350 |
| 6 | 12.5 | 1.25 D | 0.5 | 1.2 | 9.8 | 41.1 | 210 | 250 |
| 7 | 12.5 | 0.5 D | 0.5 | 1.2 | 11.0 | 39.3 | 100 | 120 |
| 8 | - | 0.5 D | 0.5 | 1.2 | 9.7 | 31.4 | 80 | 85 |
| V9 | - | - | 0.5 | 1.2 | 8.1 | 35.2 | 11 | 8 |
| V10 | 20 | 2 D | - | - | 33.1 | 148.1 | 420 | 430 |
| V11 | 20 | 2 P | 0.5 | 1.2 | 12.1 | 48.3 | 310 | 160 |
| 12 | 20 | 2 Y | 0.5 | 1.2 | 9.1 | 37.2 | 295 | 300 |

Tabelle 4 kann nun folgendes entnommen werden:
Bei konstanter Menge an VeoVa 10 (a), Silan (c) und GMA (d) nimmt die Hydrophobie kontinuierlich ab, wenn der Silikon-Anteil (b) verringert wird (Beispiele 1 bis 3 und Vergleichsbeispiel 4; Beispiele 5 bis 7). Die Nassabriebsfestigkeit wird dadurch in diesen Fällen aber nicht beeinflußt.
Ein Vergleich von Beispiel 3 oder Beispiel 7 mit Beispiel 8 (ohne VeoVa) zeigt, dass die Hydrophobie durch den Einsatz von VeoVa10 mit Ethylen und Vinylacetat als Comonomere - deutlich erhöht werden kann. Daneben wird auch die Alkalibeständigkeit maßgeblich erhöht.
Ein Vergleich von Beispiel 8 mit Vergleichsbeispiel 9 zeigt, dass die Hydrophobie dramatisch verschlechtert wird oder gänzlich verschwindet, wenn kein Silikon (b) eingesetzt wird.
Ein Vergleich von Beispiel 1 mit Vergleichsbeispiel 10 zeigt, dass die Nassabriebsfestigkeit dramatisch verschlechtert wird, wenn die Comonomeren (c) und (d) fehlen. In den beiden Rezepturen 1 und 2 nimmt die Abtragung der Beschichtung (nach 28 Tagen Lagerung) um etwa das 3-fache zu, wenn Silan (c) und Epoxid (d) weggelassen werden. Diese Comonomeren sind also essentielle Bestandteile, um eine gute Nassabriebsfestigkeit zu gewährleisten.
Ein Vergleich von Beispiel 1 mit Vergleichsbeispiel 11 zeigt, dass die Hydrophobie verschlechtert wird, wenn nur ein unfunktionalisiertes Silikon (PMDS), das nicht copolymerisieren kann, verwendet wird. Des weiteren wird insbesondere eine starke Abnahme der Hydrophobie nach 7 Tagen beobachtet, wenn das Silikon nicht mit einpolymerisiert ist. Die Zeit, nach der der Wassertropfen verschwunden ist, ist bei Beispiel 11 bei der Messung nach 7 Tagen auf die Hälfte abgefallen. Im Gegensatz dazu nimmt die Hydrophobie bei der Messung nach 7 Tagen tendenziell zu, wenn copolymerisierbares Silikon verwendet wird. Dies belegen die Beispiele 1 bis 3, 5 bis 7, 8 und 10. Es ist daher für eine dauerhafte Hydrophobie wichtig, daß Silikone enthalten sind, die polymerisierbare Gruppen, wie z.B. Vinyl-Gruppen, besitzen.
Wird nur difunktionelles α.ω-funktionalisiertes Silikon, dessen Endgruppen polymerisieren können, alleine verwendet, so ergibt sich insgesamt eine schlechtere Hydrophobie als wenn eine Mischung von un-funktionalisierten, mono-funktionalisierten und difunktionalisierten Silikonen eingesetzt wird. Dies belegt ein Vergleich von Beispiel 1 mit Beispiel 12. Im Vergleich zu Vergleichsbeispiel 11 bleibt bei Beispiel 12 die Hydrophobie allerdings zeitlich bestehen, was sich bei Beispiel 12 in einem unveränderten Wert bei der Messung nach 7 Tagen äußert.

Zusammenfassend kann man also sagen, dass der Einsatz von Silikonen die Hydrophobie verbessert. Der zusätzliche Einsatz von Ethylen und besonders VeoVa 10 hat einen positiven synergistischen Effekt und führt zu einer nochmaligen, deutlichen Erhöhung der Hydrophobie und der (Alkali)Beständigkeit. Das Niveau der Hydrophobie wird aber maßgeblich über den Silikon-Anteil gesteuert. Während bei nicht polymerisierbaren Silikonen eine unbefriedigende Hydrophobie, besonders nach längerer Zeit, erzielt wird, führt die Verwendung der Silikon-Mischung zu den besten Resultaten.

## Patentansprüche

1. Funktionalisierte, mit Silikonen hydrophob modifizierte Copolymerisate in Form deren wässrigen Dispersionen oder in Wasser redispergierbaren Pulver, auf Basis von
a) 60 bis 98.89 Gew.-% von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide,
b) 0.01 bis 30 Gew.-% von einem oder mehreren Silikonen mit einer Zahl von SiO(CₙH₂ₙ₊₁)₂-Wiederholungseinheiten von 10 bis 1000 und n = 1 bis 6, wobei 90 bis 100 Gew.-% der Silikone b) mindestens eine, aber höchstens zwei polymerisierbare Gruppen enthalten,
c) 0.05 bis 5.0 Gew.-% von einem oder mehreren hydrolysierbaren silan-Monomeren aus der Gruppe umfassend ethylenisch ungesättigte, hydrolysierbare Siliciumverbindungen und hydrolysierbare Siliciumverbindungen aus der Gruppe umfassend Epoxysilane, Aminosilane und Mercaptosilane,
d) 0.05 bis 5.0 Gew.-% von einem oder mehreren Monomeren aus der Gruppe umfassend ethylenisch ungesättigte Epoxidverbindungen,
wobei die Angaben in Gew.-% für die Komponenten a) bis d) jeweils auf das Gesamtgewicht der eingesetzten Monomere bezogen sind und sich auf 100 Gew.-% aufaddieren.

2. Funktionalisierte, mit Silikonen hydrophob modifizierte / Copolymerisate nach Anspruch 1, **dadurch gekennzeichnet, dass** als Copolymerisate Vinylester-Copolymerisate von Vinylacetat mit weiteren Vinylestern, oder Vinylester-Ethylen-Copolymerisate, oder Vinylester-Ethylen-Vinylchlorid-Copolymerisate, oder Vinylester-Acrylsäureester-Copolymerisate, oder Acrylsäureester-Copolymerisate, oder Methylmethacrylat-Copolymerisate, oder Styrol-1,3-Butadien-Copolymerisate, oder und Styrol-(Meth)Acrylsäureester-Copolymerisaten eingesetzt werden.

3. Funktionalisierte, mit Silikonen hydrophob modifizierte Copolymerisate nach Anspruch 1 oder 2, **dadurch gekennzeichnet, dass** Vinylacetat-Ethylen-Copolymerisate oder Copolymerisate von Vinylacetat und Ethylen und Vinylester einer α-verzweigten Carbonsäure mit 9 oder 10 C-Atomen eingesetzt werden, welche gegebenenfalls noch Hilfsmonomeranteile enthalten können.

4. Funktionalisierte, mit Silikonen hydrophob modifizierte Copolymerisate nach Anspruch 1 bis 3, **dadurch gekennzeichnet, dass** die Komponenten a) und b) so ausgewählt werden, dass wässrige Copolymerdispersionen und wässrige Redispersionen der Copolymerpulver resultieren, die ohne Zusatz von Filmbildehilfsmittel eine Mindestfilmbildetemperatur MFT von < 10°C aufweisen.

5. Funktionalisierte, mit Silikonen hydrophob modifizierte Copolymerisate nach Anspruch 1 bis 4, **dadurch gekennzeichnet, dass** Polydialkylsiloxane b) mit einer oder zwei terminalen Vinyl-, Acryloxyalkyl-, Methacryloxyalkyl-ode Mercaptoalkyl-Gruppen eingesetzt werden.

6. Funktionalisierte, mit Silikonen hydrophob modifizierte Copolymerisate nach Anspruch 5, **dadurch gekennzeichnet, dass** ein oder mehrere Polydimethylsiloxane b) aus der Gruppe umfassend α,ω-Divinyl-Polydimethylsiloxane, α,ω-Di-(3-acryloxypropyl)-Polydimethylsiloxane, α, ω- Di-(3-methacryloxypropyl)-Polydimethylsiloxane, α-Monovinyl-Polydimethylsiloxane, α-Mono-(3-acryloxypropyl)-Polydimethylsiloxane, α-Mono-(3-methacryloxypropyl)-Polydimethylsiloxane, α-Mono-(3-mercaptopropyl)-Polydimethylsiloxane, α,ω-Di-(3-mercapto propyl)propyl)-Polydimethylsiloxane eingesetzt werden.

7. Funktionalisierte, mit Silikonen hydrophob modifizierte Copolymerisate nach Anspruch 1 bis 6, **dadurch gekennzeichnet, dass** binäre Gemische aus monofunktionellen und unfunktionellen Polydialkylsiloxanen, oder difunktionellen und unfunktionellen Polydialkylsiloxanen; oder ternäre Gemische aus unfunktionellen Polydialkylsiloxanen, monofunktionellen Polydialkylsiloxanen und difunktionellen Polydialkylsiloxanen eingesetzt werden.

8. Funktionalisierte, mit Silikonen hydrophob modifizierte Copolymerisate nach Anspruch 1 bis 7, **dadurch gekennzeichnet, dass** als Siliciumverbindungen c) ethylenisch ungesättigte, copolymerisierbare Siliciumverbindungen der allgemeinen Formel R¹SiR₀₋₂(OR²)₁₋₃ eingesetzt werden, wobei R die Bedeutung C₁- bis C₃-Alkylrest, C₁- bis C₃-Alkoxyrest oder Halogen hat, R¹ die Bedeutung CH₂=CR³-(CH₂)₀₋₁ oder CH₂=CR³CO₂(CH₂)₁₋₃ hat, R² ein unverzweigter oder verzweigter, gegebenenfalls substituierter Alkylrest mit 1 bis 12 C-Atomen ist oder ein Acylrest mit 2 bis 12 C-Atomen ist, wobei R² gegebenenfalls durch eine Ethergruppe unterbrochen sein kann, und R³ für H oder CH₃ steht.

9. Funktionalisierte, mit Silikonen hydrophob modifizierte Copolymerisate nach Anspruch 1 bis 7, **dadurch gekennzeichnet, dass** als Siliciumverbindungen c) funktionalisierte, hydrolysierbare Siliciumverbindungen eingesetzt werden, aus der Gruppe der Epoxysilane und Aminosilane und der Mercaptosilane der allgemeinen Formel HS-(CR⁴₂)₁₋₃-SiR⁵₃, wobei R⁴ gleich oder verschieden ist und die Bedeutung H und C₁- bis C₆-Alkylgruppe, R⁵ gleich oder verschieden ist und die Bedeutung C₁- bis C₆-Alkylgruppe und C₁- bis C₆-Alkoxygruppe hat, wobei mindestens einer der Reste R eine Alkoxygruppe ist.

10. Funktionalisierte, mit Silikonen hydrophob modifizierte Copolymerisate nach Anspruch 1 bis 9, **dadurch gekennzeichnet, dass** ein oder mehrere Siliciumverbindungen c) eingesetzt werden, aus der Gruppe umfassend Vinyltrimethoxysilan, Vinylmethyldimethoxysilan, Vinyltriethoxysilan, Vinylmethyldiethoxysilan, Vinyltris-(1-methoxy)-isopropoxysilan, Methacryloxypropyl-tris(2-methoxyethoxy)-silan, 3-(Triethoxysilyl)propyl-bernsteinsäureanhydridsilan, 3-Mercaptopropyltrimethoxysilan, Glycidoxypropyltrimethoxysilan, Glycidoxypropyltriethoxysilan, 3-Methacryloxypropyltrimethoxysilan, 3-Methacryloxypropylmethyldimethoxysilan und Methacryloxymethyltrimethoxysilan.

11. Funktionalisierte, mit Silikonen hydrophob modifizierte Copolymerisate nach Anspruch 1 bis 10, **dadurch gekennzeichnet, dass** als Epoxidgruppen enthaltende Comonomere d) ein oder mehrere eingesetzt werden, aus der Gruppe umfassend Glycidylacrylat, Glycidylmethacrylat, Allylglycidether, Vinylglycidether, Vinylcyclohexenoxid, Limonenoxid, Myrcenoxid, Caryophyllenoxid.

12. Funktionalisierte, mit Silikonen hydrophob modifizierte Copolymerisate nach Anspruch 1 bis 11, **dadurch gekennzeichnet, dass** 0.1 bis 1.0 Gew.-% Comonomer c) mit 0.25 bis 1.5 Gew.-% Comonomer d) eingesetzt werden.

13. Verfahren zur Herstellung von funktionalisierten, mit Silikonen hydrophob modifizierten Copolymerisate nach Anspruch bis 12, mittels radikalischer Polymerisation in wässrigem Medium.

14. Verfahren nach Anspruch 13 **dadurch gekennzeichnet, dass** die Herstellung mittels Emulsionspolymerisation erfolgt.

15. Verfahren nach Anspruch 13 und 14 **dadurch gekennzeichnet, dass** der Silikonanteil b) mit einem Teil der Monomeren a) komplett vorgelegt und das restliche Monomer a) zudosiert wird.

16. Verfahren nach Anspruch 13 bis 15 **dadurch gekennzeichnet, dass** der Silananteil c) insgesamt während der Polymerisation vermischt mit einem Teil der Monomeren a) zudosiert wird und der Epoxidanteil d) ebenfalls insgesamt zudosiert wird.

17. Verfahren nach Anspruch 16 **dadurch gekennzeichnet, dass** der Epoxidanteil d) gegen Ende der Polymerisation, bei einem Umsatz von 80 bis 100 %, zudosiert wird.

18. Verfahren nach Anspruch 13 bis 17 **dadurch gekennzeichnet, dass** zunächst eines oder mehrere Silane kontinuierlich zudosiert werden und ein weiteres, anderes Silan zusammen mit dem Epoxidanteil nach Beendigung der Dosierung des/der ersten Silans/Silane zudosiert wird.

19. Verfahren nach Anspruch 13 bis 18 **dadurch gekennzeichnet, dass** nach Abschluß der Polymerisation zur Restmonomerentfernung nachpolymerisiert wird, und gegebenenfalls weitere flüchtige, nicht wässrige Bestandteile der Dispersion mittels Destillation entfernt werden.

20. Verfahren nach Anspruch 13 bis 20 **dadurch gekennzeichnet, dass** zur Herstellung von in Wasser redispergierbaren Polymerpulvern die wässrigen Dispersionen, gegebenenfalls nach Zusatz von Schutzkolloiden als Verdüsungshilfe, getrocknet werden.

21. Verwendung der funktionalisierte, mit Silikonen hydrophob modifizierten Copolymerisate nach Anspruch 1 bis 12 als Bindemittel in Klebe- und Beschichtungsmittel.

22. Verwendung der funktionalisierte, mit Silikonen hydrophob modifizierten Copolymerisate nach Anspruch 1 bis 12 als Modifizierungsmittel und als Hydrophobierungsmittel.

23. Verwendung nach Anspruch 21 zur Verfestigung von Fasern oder anderen partikulären Materialien.

24. Verwendung nach Anspruch 21 als Schutzbeschichtung für Metalle oder Releasebeschichtung zur Papierbehandlung.

25. Verwendung nach Anspruch 21 als Bindemittel für Anstrich-, Klebe- und Beschichtungsmittel im Baubereich.

26. Verwendung nach Anspruch 25 in Fliesenklebern und Vollwärmeschutzklebemittel.

27. Verwendung nach Anspruch 25 in emissionsarmen Kunststoffdispersionsfarben und Kunststoffdispersionsputzen.

28. Verwendung nach Anspruch 27 in carbonatreichen oder silikatreichen Rezepturen.

29. Verwendung nach Anspruch 27 in hochgefüllten und überkritisch formulierten Zusammensetzungen.

## Claims

1. Functionalized copolymer which has been hydrophobicized with silicones and is in the form of an aqueous dispersion or water-redispersible powder, based on
a) from 60 to 98.89% by weight of one or more monomers selected from the group consisting of vinyl esters of unbranched or branched alkylcarboxylic acids having from 1 to 15 carbon atoms, methacrylates and acrylates of alcohols having from 1 to 15 carbon atoms, vinylaromatics, olefins, dienes, and vinyl halides,
b) from 0.01 to 30% by weight of one or more silicones with from 10 to 1 000 SiO(CₙH₂ₙ₊₁)₂ repeat units where n is from 1 to 6, and where from 90 to 100% by weight of the silicones b) contain at least one, but not more than two, polymerizable groups,
c) from 0.05 to 5.0% by weight of one or more hydrolysable silane monomers selected from the group consisting of ethylenically unsaturated, hydrolysable silicon compounds and hydrolysable silicon compounds selected from the group consisting of epoxysilanes, aminosilanes and mercaptosilanes,
d) from 0.05 to 5.0 % by weight of one or more monomers selected from the group consisting of ethylenically unsaturated epoxy compounds,
where the data in % by weight for components a) to d) are always based on the total weight of the monomers used and give 100% by weight in total.

2. Functionalized, silicone-hydrophobicized copolymer according to Claim 1, **characterized in that** the copolymers used comprise vinyl ester copolymers of vinyl acetate with other vinyl esters, or comprises vinyl ester-ethylene copolymers, or vinyl ester-ethylene-vinyl chloride copolymers, or vinyl ester-acrylic ester copolymers, or acrylic ester copolymers, or methyl methacrylate copolymers, or styrene-1,3-butadiene copolymers, or styrene-(meth)acrylic copolymers.

3. Functionalized, silicone-hydrophobicized copolymer according to Claim 1 or 2, **characterized in that** use is made of vinyl acetate-ethylene copolymers or copolymers of vinyl acetate and ethylene and vinyl esters of an α-branched carboxylic acid having 9 or 10 carbon atoms, where these may, where appropriate, also have some auxiliary monomer content.

4. Functionalized, silicone-hydrophobicized copolymer according to any of Claims 1 to 3, **characterized in that** the selection of components a) and b) is such as to give aqueous copolymer dispersions and aqueous redispersions of the copolymer powders, where these have a minimum film-forming temperature MFT of <10^{°}C without addition of film-forming aids.

5. Functionalized, silicone-hydrophobicized copolymer according to any of Claims 1 to 4, **characterized in that** use is made of polydialkylsiloxanes b) having one or two terminal vinyl, acryloxyalkyl, methacryloxyalkyl, or mercaptoalkyl groups.

6. Functionalized, silicone-hydrophobicized copolymer according to Claim 5, **characterized in that** use is made of one or more polydimethylsiloxanes b) selected from the group consisting of α,ω-divinylpolydimethylsiloxanes, α,ω-di(3-acryloxypropyl)-polydimethylsiloxanes, α,ω-di(3-methacryloxypropyl)polydimethylsiloxanes, α-monovinylpolydimethylsiloxanes, α-mono (3-acryloxypropyl) polydimethylsiloxanes, α-mono(3-methacryloxypropyl)-polydimethylsiloxanes, α-mono(3-mercaptopropyl)-polydimethylsiloxanes, or α,ω-di(3-mercaptopropyl)polydimethylsiloxanes.

7. Functionalized, silicone-hydrophobicized copolymer according to any of Claims 1 to 6, **characterized in that** use is made of binary mixtures made from monofunctional and non-functional polydialkylsiloxanes, or from bifunctional and non-functional polydialkylsiloxanes; or of ternary mixtures made from non-functional polydialkylsiloxanes, monofunctional polydialkylsiloxanes, and bifunctional polydialkylsiloxanes.

8. Functionalized, silicone-hydrophobicized copolymer according to any of Claims 1 to 7, **characterized in that** the silicon compounds c) used comprise ethylenically unsaturated, copolymerizable silicon compounds of the general formula R¹SiR₀₋₂(OR²)₁₋₃, where R is a C₁-C₃-alkyl radical, C₁-C₃-alkoxy radical, or halogen, R¹ is CH₂=CR³-(CH₂)₀₋₁ or CH₂=CR³CO₂(CH₂)₁₋₃, R² is an unbranched or branched, unsubstituted or substituted alkyl radical having from 1 to 12 carbon atoms, or is an acyl radical having from 2 to 12 carbon atoms, and, where appropriate, R² may have interruption by an ether group, and R³ is H or CH₃.

9. Functionalized, silicone-hydrophobicized copolymer according to any of Claims 1 to 7, **characterized in that** the silicon compounds c) used comprise functionalized, hydrolysable silicon compounds selected from the group of the epoxysilanes and aminosilanes, and the mercaptosilanes of the general formula HS-(CR⁴₂)₁₋₃-SiR⁵₃, where R⁴ is identical or different and are H or a C₁-C₆-alkyl group, and R⁵ is identical or different and is a C₁-C₆-alkyI group or a C₁-C₆-alkoxy group, where at least one of the radicals R⁵ is an alkoxy group.

10. Functionalized, silicone-hydrophobicized copolymer according to any of Claims 1 to 9, **characterized in that** use is made of one or more silicon compounds c) selected from the group consisting of vinyltrimethoxysilane, vinylmethyldimethoxysilane, vinyltriethoxysilane, vinylmethyldiethoxysilane, vinyltris(1-methoxy)isopropoxysilane, methacryloxypropyltris(2-methoxyethoxy)silane, 3-(triethoxysilyl)propylsuccinic anhydride silane, 3-mercaptopropyltrimethoxysilane, glycidoxypropyltrimethoxysilane, glycidoxypropyltriethoxysilane, 3-methacryloxypropyltrimethoxysilane, 3-methacryloxypropylmethyldimethoxysilane, and methacryloxymethyltrimethoxysilane.

11. Functionalized, silicone-hydrophobicized copolymer according to any of Claims 1 to 10, **characterized in that** the comonomers d) used containing epoxy groups comprise one or more selected from the group consisting of glycidyl acrylate, glycidyl methacrylate, allyl glycidyl ether, vinyl glycidyl ether, vinyl cyclohexene oxide, limonen oxide, myrcene oxide, and caryophyllene oxide.

12. Functionalized, silicone-hydrophobicized copolymer according to any of Claims 1 to 11, **characterized in that** use is made of from 0.1 to 1.0% by weight of comonomer c) with from 0.25 to 1.5% by weight of comonomer d).

13. Process for preparing functionalized, silicone-hydrophobicized copolymers according to any of Claims 1 to 12, by means of free-radical polymerization in an aqueous medium.

14. Process according to Claim 13, **characterized in that** the preparation takes place by means of emulsion polymerization.

15. Process according to Claims 13 and 14, **characterized in that** all of the silicon content b) forms an initial charge with a portion of the monomers a), and the residual monomer a) is metered in.

16. Process according to any of Claims 13 to 15, **characterized in that** all of the silane content c) is metered in during the polymerization, mixed with a portion of the monomers a) , and all of the epoxide content d) is likewise metered in.

17. Process according to Claim 16, **characterized in that** the epoxide content d) is metered in toward the end of the polymerization, at from 80 to 100% conversion.

18. Process according to any of Claims 13 to 17, **characterized in that** one or more silanes are first metered in continuously and a further, different silane is metered in together with the epoxide content after the feed of the first silane(s) has ended.

19. Process according to any of Claims 13 to 18, **characterized in that**, after completion of the polymerization, post-polymerization is carried out to remove residual monomer, and, where appropriate, other volatile non-aqueous constituents of the dispersion are removed by means of distillation.

20. Process according to any of Claims 13 to 20, **characterized in that**, to prepare water-redispersible polymer powders, the aqueous dispersions are dried, where appropriate after addition of protective colloids as spraying aid.

21. Use of the functionalized, silicone-hydrophobicized copolymer according to any of Claims 1 to 12, as a binder in an adhesive or coating composition.

22. Use of the functionalized, silicone-hydrophobicized copolymer according to any of claims 1 to 12 as a modifier or hydrophobicizing agent..

23. Use according to Claim 21 for the strengthening of fibres or of other particular materials.

24. Use according to Claim 21 as a protective coating for metals or a release coating for paper treatment.

25. Use according to Claim 21 as a binder for the paints, adhesives, or coating compositions used in the construction sector.

26. Use according to Claim 25 in tile adhesives or adhesives for exterior heat insulation systems.

27. Use according to Claim 25 in low-emission polymer emulsion paints or polymer dispersion renders.

28. Use according to Claim 27 in carbonate-rich or silicate-rich formulations.

29. Use according to Claim 27 in highly filled and supercritically formulated compositions.

## Revendications

1. Copolymères fonctionnalisés, à modification hydrophobe avec des silicones, sous forme de leurs dispersions aqueuses ou poudres redispersables dans l'eau, à base de
a) 60 à 98,89 % en poids d'un ou plusieurs monomères choisis dans le groupe comprenant des esters vinyliques d'acides alkylcarboxyliques ramifiés ou non ramifiés ayant de 1 à 15 atomes de carbone, des esters d'acide méthacrylique et des esters d'acide acrylique avec des alcools ayant de 1 à 15 atomes de carbone, des composés vinylaromatiques, des oléfines, des diènes et des halogénures de vinyle,
b) 0,01 à 30 % en poids d'un ou plusieurs silicones ayant un nombre de motifs SiO(CₙH₂ₙ₊₁)₂ allant de 10 à 1 000 et n = 1 à 6, 90 à 100 % en poids des silicones b) contenant au moins un, mais au maximum deux groupes polymérisables,
c) 0,05 à 5,0 % en poids d'un ou plusieurs monomères silane hydrolysables choisis dans le groupe comprenant des composés siliciés hydrolysables à insaturation éthylénique et des composés siliciés hydrolysables choisis dans le groupe comprenant les époxysilanes, les aminosilanes et les mercaptosilanes,
d) 0,05 à 5,0 % en poids d'un ou plusieurs monomères choisis dans le groupe comprenant des composés époxy à insaturation éthylénique,
les données en % en poids des composants a) à d) étant chacune par rapport au poids total des monomères utilisés et s'additionnant pour faire 100 % en poids.

2. Copolymères fonctionnalisés, à modification hydrophobe avec des silicones, selon la revendication 1, **caractérisés en ce que** sont utilisés en tant que copolymères des copolymères d'esters vinyliques constitués d'acétate de vinyle avec d'autres esters vinyliques, ou des copolymères ester vinylique/éthylène ou des copolymères ester vinylique/éthylène/chlorure de vinyle ou des copolymères ester vinylique/ester d'acide acrylique ou des copolymères d'esters d'acide acrylique ou des copolymères de méthacrylate de méthyle ou des copolymères styrène/1,3-butadiène ou des copolymères styrène/ester d'acide (méth)acrylique.

3. Copolymères fonctionnalisés, à modification hydrophobe avec des silicones, selon la revendication 1 ou 2, **caractérisés en ce qu'**on utilise des copolymères acétate de vinyle/éthylène ou des copolymères d'acétate de vinyle et éthylène et ester vinylique d'un acide carboxylique α-ramifié ayant 9 ou 10 atomes de carbone, qui peuvent éventuellement contenir encore des fractions monomères auxiliaires.

4. Copolymères fonctionnalisés, à modification hydrophobe avec des silicones, selon l'une quelconque des revendications 1 à 3, **caractérisés en ce que** les composants a) et b) sont choisis de manière qu'il en résulte des dispersions aqueuses de copolymères et des redispersions aqueuses des poudres de copolymères qui, sans addition d'adjuvant filmogène, présentent une température minimale de formation de feuil TMF de < 10°C.

5. Copolymères fonctionnalisés, à modification hydrophobe avec des silicones, selon l'une quelconque des revendications 1 1 à 4, **caractérisés en ce qu'**on utilise des polydialkylsiloxanes b) qui comportent un ou deux groupes vinyle, acryloxyalkyle, méthacryloxyalkyle ou mercaptoalkyle en bout de chaîne.

6. Copolymères fonctionnalisés, à modification hydrophobe avec des silicones, selon la revendication 5, **caractérisés en ce qu'**on utilise un ou plusieurs polydiméthylsiloxanes b) choisis dans le groupe comprenant les α,ω-divinylpolydiméthylsiloxanes, les α,ω-di-(3-acryloxypropyl)-polydiméthylsiloxanes, les α,ω-di-(3-méthacryloxypropyl)-polydiméthylsiloxanes, les α-monovinylpolydiméthylsiloxanes, les α-mono-(3-acryloxypropyl)-polydiméthylsiloxanes, les α-mono-(3-méthacryloxypropyl)-polydiméthylsiloxanes, les α-mono-(3-mercaptopropyl)-polydiméthylsiloxanes, les α,ω-di-(3-mercaptopropyl)-polydiméthylsiloxanes.

7. Copolymères fonctionnalisés, à modification hydrophobe avec des silicones, selon l'une quelconque des revendications 1 à 6, **caractérisés en ce qu'**on utilise des mélanges binaires de polydialkylsiloxanes monofonctionnels et de polydialkylsiloxanes non fonctionnels, ou de polydialkylsiloxanes bifonctionnels et de polydialkylsiloxanes non fonctionnels, ou des mélanges ternaires de polydialkylsiloxanes non fonctionnels, polydialkylsiloxanes monofonctionnels et polydialkylsiloxanes bifonctionnels.

8. Copolymères fonctionnalisés, à modification hydrophobe avec des silicones, selon l'une quelconque des revendications 1 1 à 7, **caractérisés en ce qu'**on utilise en tant que composés siliciés c) des composés siliciés copolymérisables à insaturation éthylénique, de formule générale R¹SiR₀₋₂(OR²)₁₋₃, R ayant la signification d'un radical alkyle en C₁-C₃, d'un radical alcoxy en C₁-C₃ ou d'un atome d'halogène, R¹ représentant CH₂=CR³- (CH₂)₀₋₁ ou CH₂=CR³CO₂ (CH₂) ₁₋₃, R² étant un radical alkyle ramifié ou non ramifié, éventuellement substitué, ayant de 1 à 12 atomes de carbone, ou un radical acyle ayant de 2 à 12 atomes de carbone, R² pouvant éventuellement être interrompu par un groupe éther, et R³ représentant H ou CH₃.

9. Copolymères fonctionnalisés, à modification hydrophobe avec des silicones, selon l'une quelconque des revendications 1 à 7, **caractérisés en ce qu'**on utilise en tant que composés siliciés c) des composés siliciés fonctionnalisés hydrolysables choisis dans le groupe des époxysilanes et aminosilanes et des mercaptosilanes de formule générale HS-(CR⁴₂)₁₋₃-SiR⁵₃, les radicaux R⁴ étant identiques ou différents et ayant la signification de H et d'un groupe alkyle en C₁-C₆, les radicaux R⁵ étant identiques ou différents et ayant la signification d'un groupe alkyle en C₁-C₆ et d'un groupe alcoxy en C₁-C₆, au moins l'un des radicaux R⁵ étant un groupe alcoxy.

10. Copolymères fonctionnalisés, à modification hydrophobe avec des silicones, selon l'une quelconque des revendications 1 à 9, **caractérisés en ce qu'**on utilise un ou plusieurs composés siliciés c) choisis dans le groupe comprenant le vinyltriméthoxysilane, le vinylméthyldiméthoxysilane, le vinyltriéthoxysilane, le vinylméthyldiéthoxysilane, le vinyl-tris(1-méthoxy)-isopropoxysilane, le méthacryloxypropyl-tris(2-méthoxyéthoxy)silane, le 3-(triéthoxysilyl)propyl-succinanhydride-silane, le 3-mercaptopropyltriméthoxysilane, le glycidoxypropryltriméthoxysilane, le glycidoxypropyltriéthoxysilane, 3-méthacryloxypropyltriméthoxysilane, le 3-méthacryloxypropylméthyldiméthoxysilane et le méthacryloxyméthyltriméthoxysilane.

11. Copolymères fonctionnalisés, à modification hydrophobe avec des silicones, selon l'une quelconque des revendications 1 à 10, **caractérisés en ce qu'**on utilise en tant que comonomères d) contenant des groupes époxy un ou plusieurs monomères choisis dans le groupe comprenant l'acrylate de glycidyle, le méthacrylate de glycidyle, l'allylglycidéther, le vinylglycidéther, l'oxyde de vinylcyclohexène, l'oxyde de limonène, l'oxyde de myrcène, l'oxyde de caryophyllène.

12. Copolymères fonctionnalisés, à modification hydrophobe avec des silicones, selon l'une quelconque des revendications 1 à 11, **caractérisés en ce qu'**on utilise 0,1 à 1,0 % en poids de comonomère c) avec 0,25 à 1,5 % en poids de comonomère d).

13. Procédé pour la préparation de copolymères fonctionnalisés, à modification hydrophobe avec des silicones, selon l'une quelconque des revendications 1 à 12, par polymérisation radicalaire en milieu aqueux.

14. Procédé selon la revendication 13, **caractérisé en ce que** la préparation s'effectue par polymérisation en émulsion.

15. Procédé selon les revendications 13 et 14, **caractérisé en ce que** la fraction silicone b) est en totalité disposée au préalable avec une partie des monomères a) et le monomère a) restant est ajouté de façon réglée.

16. Procédé selon l'une quelconque des revendications 13 à 15, **caractérisé en ce que** la fraction silane c) est en totalité ajoutée de façon réglée, pendant la polymérisation, en mélange avec une partie des monomères a), et la fraction époxyde d) est également en totalité ajoutée de façon réglée.

17. Procédé selon la revendication 16, **caractérisé en ce que** la fraction époxyde d) est ajoutée de façon réglée vers la fin de la polymérisation, à un degré de conversion de 80 à 100 %.

18. Procédé selon l'une quelconque des revendications 13 à 17, **caractérisé en ce que** d'abord on ajoute de façon réglée, en continu, un ou plusieurs silanes et on ajoute de façon réglée encore un autre silane conjointement avec la fraction époxyde, une fois terminée l'addition réglée du/des premiers(s) silane(s).

19. Procédé selon l'une quelconque des revendications 13 à 18, **caractérisé en ce qu'**une fois terminée la polymérisation, on effectue une post-polymérisation pour l'élimination des monomères résiduels, et éventuellement d'autres composants volatils non aqueux de la dispersion sont éliminés par distillation.

20. Procédé selon l'une quelconque des revendications 13 à 20, **caractérisé en ce que**, pour la préparation de poudres de polymères redispersables dans l'eau, les dispersions aqueuses sont séchées, éventuellement après addition de colloïdes protecteurs en tant qu'adjuvant de pulvérisation.

21. Utilisation des copolymères fonctionnalisés, à modification hydrophobe avec des silicones, selon l'une quelconque des revendications 1 à 12, en tant que liant dans des adhésifs et des compositions de revêtement.

22. Utilisation des copolymères fonctionnalisés, à modification hydrophobe avec des silicones, selon l'une quelconque des revendications 1 à 12, en tant qu'agent de modification et en tant qu'agent d'hydrofugation.

23. Utilisation selon la revendication 21, pour la consolidation de fibres ou d'autres matériaux particulaires.

24. Utilisation selon la revendication 21, en tant que revêtement protecteur pour métaux ou couche anti-adhésive dans le traitement du papier.

25. Utilisation selon la revendication 21, en tant que liant pour peintures, colles et compositions de revêtement dans le domaine du bâtiment.

26. Utilisation selon la revendication 25, dans des colles pour carreaux et des colles totalement calorifuges.

27. Utilisation selon la revendication 25, dans des enduits en dispersion à base de matières plastiques et des peintures en dispersion à base de matières plastiques, à faible émission.

28. Utilisation selon la revendication 27, dans des compositions riches en silicates ou riches en carbonates.

29. Utilisation selon la revendications 27, dans des compositions à haute teneur en charges et à formulation supercritique.
